(19) Europäisches Patentamt
European Patent Office
Office européen des brevets

(11) EP 4 303 982 A1

(12) **EUROPEAN PATENT APPLICATION**
published in accordance with Art. 153(4) EPC

(43) Date of publication:
**10.01.2024 Bulletin 2024/02**

(21) Application number: **22929217.2**

(22) Date of filing: **23.05.2022**

(51) International Patent Classification (IPC):
***H01M 10/0567*** *(2010.01)*

(86) International application number:
**PCT/CN2022/094455**

(87) International publication number:
**WO 2023/225793 (30.11.2023 Gazette 2023/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **ZHANG, Cuiping**
  **Ningde, Fujian 352100 (CN)**
- **HAN, Changlong**
  **Ningde, Fujian 352100 (CN)**
- **FAN, Peng**
  **Ningde, Fujian 352100 (CN)**
- **WU, Zeli**
  **Ningde, Fujian 352100 (CN)**
- **HUANG, Lei**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

# (54) SECONDARY BATTERY, BATTERY MODULE, BATTERY PACK, AND ELECTRICAL DEVICE

(57) This application provides a secondary battery with improved safety performance and service life through cooperation of a positive electrode material and an electrolyte. The secondary battery includes a positive electrode containing a positive electrode active material, a negative electrode, an electrolyte, and a separator, where the positive electrode active material contains a transition metal element, and a molar ratio of Mn in the transition metal element, r(Mn), satisfies $0.3 \leq r(Mn) \leq 1$; and the electrolyte contains an additive selected from at least one of a compound (A), a compound (B), and a compound (C) capable of complexing manganese ions, and a compound (D) serving as a lithium salt. A total mass percentage of the compound (A), compound (B), and compound (C) in the electrolyte is W1%, where W1% is 0.1% to 5%; a molar ratio C1 (mol/L) of the compound (D) in the electrolyte satisfies $0.2 \leq C1 \leq 1.5$; and r(Mn), C1 and W1% satisfy the following relation: $13 \leq (100W1\% + 12C1)/r(Mn) \leq 20$.

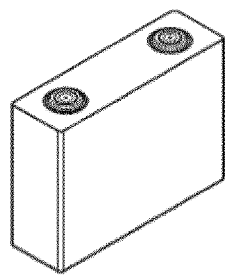


FIG. 1

EP 4 303 982 A1

## Description

### TECHNICAL FIELD

This application relates to the field of secondary battery technologies, and in particular, to a secondary battery, a battery module, a battery pack, and an electric apparatus.

### BACKGROUND

In recent years, with increasingly wide use of secondary batteries, secondary batteries have been widely used in energy storage power supply systems such as hydroelectric, thermal, wind, and solar power plants, as well as many other fields including electric tools, electric bicycles, electric motorcycles, electric vehicles, military equipment, aerospace, and the like. Along with the great development of secondary batteries, higher requirements are imposed on their energy density, cycling performance, safety performance, and the like.

A secondary battery typically includes a positive electrode, a negative electrode, a separator, an electrolyte, and the like. For example, in a lithium-ion secondary battery, typically lithium ions are intercalated and deintercalated between the positive and negative electrodes and transferred via electrolytic salts in the electrolyte to implement transfer of charges, thereby implementing mutual conversion between chemical energy and electrical energy. These components need to cooperate with each other to take the energy density, cycling performance and safety performance of the secondary battery into consideration. For example, electrolyte components that are conductive to the transfer of lithium ions may potentially corrode the materials of the positive and negative electrodes, thereby affecting the safety performance, service life, and the like of battery. Therefore, proper designs are required for the positive and negative electrodes as well as the electrolyte of secondary batteries. At present, there is still room for improvement in these aspects.

### SUMMARY

This application is made in view of the foregoing technical problems and is intended to provide composition designs for positive electrode materials and electrolytes, so as to cooperatively improve the safety performance and service life of secondary batteries.

In positive electrode active materials with relatively high energy density, such as nickel-manganese-lithium ternary materials, lithium manganate, and manganese-containing lithium-rich materials, the element manganese has no change in valence state during charge and discharge of a battery and can play a role of stabilizing the positive electrode structure. However, a small amount of HF present in the electrolyte corrodes a positive electrode interface, resulting in leaching of manganese and damage of a SEI film of the negative electrode and leading to a shorter service life of the cell. In addition, the electrolyte is likely to have a reduction reaction on a negative electrode interface exposed, generating heat that causes thermal runaway, thereby affecting the safety performance of the secondary battery. Therefore, if it is necessary to take the stability of the positive electrode structure, the cell service life, and the safety performance into consideration, both the positive electrode material and the electrolyte need to be designed.

To achieve the foregoing purpose, in this application, from the perspective of composition designs of the positive electrode active materials and electrolytes for secondary batteries, under a condition that a positive electrode active material containing a relatively high content of manganese (Mn) is used in the positive electrode, the electrolyte also contains a proper amount of a compound capable of inhibiting leaching of manganese without affecting other performance of the positive and negative electrodes, so as to achieve the foregoing purpose.

A first aspect of this application provides a secondary battery, where the secondary battery includes a positive electrode plate, a negative electrode plate, an electrolyte, and a separator.

The positive electrode plate includes a positive electrode active material, the positive electrode active material contains a transition metal element, and a molar ratio of Mn in the transition metal element, r(Mn), satisfies $0.3 \le r(Mn) \le 1$.

The electrolyte contains:

at least one selected from lithium bisoxalate borate serving as a compound (A), a compound (B) represented by the following formula (1), and a compound (C) represented by the following formula (2), and a lithium salt.

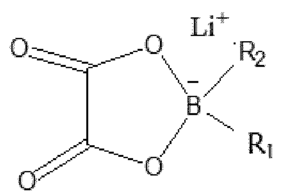

(1)

In formula (1), $R_1$ and $R_2$ each are independently a fluorine atom or fluorine-containing alkyl with 1-3 carbon atoms.

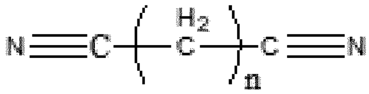

(2)

In formula (2), $2 \le n \le 4$;

a total mass percentage of the compound (A), compound (B), and compound (C) in the electrolyte is W1%, where W1% is 0.1% to 5%; and
the lithium salt includes a compound (D) represented by the following formula (3).

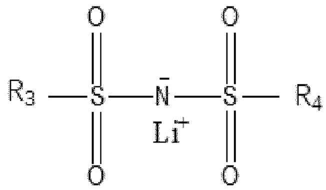

(3)

In formula (3), $R_3$ and $R_4$ each independently represent alkyl with 1-3 carbon atoms that is substitutable by a fluorine atom, a hydrogen atom, a fluorine atom, or a chlorine atom;

a molar ratio C1 of the compound (D) in the electrolyte satisfies $0.2 \le C1 \le 1.5$, where C1 is in unit of mol/L; and
the molar ratio of Mn in the transition metal element, r(Mn), of the positive electrode active material, the molar ratio C1 of the compound (D) in the electrolyte, and the total mass percentage W1% of the compounds (A), (B), and (C) in the electrolyte satisfy the following relation:

$$13 \le (100 \times W1\% + 12C1)/r(Mn) \le 20.$$

As a result, a high content of Mn results in high structural stability of the positive electrode material, thereby prolonging the cycle life of the cell of the secondary battery, and the compounds (A), (B), (C), and (D) can inhibit leaching of Mn and damage of a SEI film, thereby improving the safety performance of the secondary battery. Moreover, compatibility with the negative electrode and reduced corrosion of the electrode current collector by the electrolyte can also be achieved.

In any embodiment, $1 \le 100 \times W1\%/r(Mn) \le 2$. This facilitates a complexation effect of the compounds (A), (B), and (C) on Mn ions, so that leaching of the Mn ions is inhibited better, improving the safety performance of the secondary battery.

In any embodiment, $1 \le C1/r(Mn) \le 1.5$. This better exerts the effect of the compound (D) for inhibiting generation of HF in the electrolyte, so that leaching of the Mn ions is inhibited, improving the safety performance of the secondary battery.

In any embodiment, the lithium salt further includes $LiPF_6$, and a molar ratio C2 (mol/kg) of $LiPF_6$ in the electrolyte satisfies $0.6 \le C2 \le 1$. This can alleviate corrosion of the positive electrode current collector by the compound (D) and can also improve the high-temperature cycling performance and safety performance of the secondary battery.

In any embodiment, $0.8 \le C1 + C2 \le 2$. This ensures a relatively high conductivity of the electrolyte of the battery.

In any embodiment, W1% is 0.5% to 3%. As a result, the Mn ions can be effectively complexed without compromising the high-temperature storage life of the secondary battery.

In any embodiment, the compound (B) is lithium borate difluoroxalate. As a result, the Mn ions can be effectively complexed.

In any embodiment, the compound (D) is at least one selected from lithium difluorosulfonimide, lithium bis(trifluoromethyl) sulfonimide, lithium (fluorosulfonyl)(trifluoromethyl) sulfonimide, lithium (fluorosulfonyl)(perfluoroethyl) sulfonimide, and lithium bis(perfluoroethyl) sulfonimide, optionally at least one selected from lithium difluorosulfonimide and lithium bis(perfluoroethyl) sulfonimide. This can help to alleviate generation of HF, thereby inhibiting leaching of Mn.

In any embodiment, the positive electrode active material includes at least one selected from $LiNi_xCo_yMn_zM1_{1-x-y-z}O_2$, $LiMn_2O_4$, and $Li_2MnO_3(1 - a)LiM2O_2$; where M1 is selected from any one of Al, Co, Ni, Mg,

Cu, Zn, Sn, B, Ga, Cr, Sr, V, and Ti, $0 \leq x < 1$, $0 \leq y \leq 1$, $0 \leq z \leq 1$, and $x + y + z \leq 1$; M2 is Ni, Co, or Mn; and $0 < a < 1$. As a result, a positive electrode active material with a relatively high content of Mn can be obtained, so that the structural stability of the positive electrode material is improved, thereby prolonging the cell service life of the secondary battery.

In any embodiment, a molar ratio of the transition metal element in the positive electrode active material is 0.15 to 0.4, optionally 0.25 to 0.34. This helps to obtain a stable positive electrode structure and a relatively high charge and discharge capacity. The transition metal element is preferably Mn and any one selected from Co, Ni, Cu, Zn, Cr, V, and Ti.

In any embodiment, the positive electrode plate includes a positive electrode material and a positive electrode current collector, where a mass proportion w of water in the positive electrode material satisfies 100 ppm $\leq w \leq$ 400 ppm, optionally 300 ppm $\leq w \leq$ 400 ppm. As a result, manufacturing costs of secondary batteries can be reduced without affecting the performance of the secondary batteries.

A second aspect of this application further provides a battery module including the secondary battery according to the first aspect.

A third aspect of this application provides a battery pack including the battery module according to the second aspect of this application.

A fourth aspect of this application provides an electric apparatus including at least one of the secondary battery according to the first aspect of this application, the battery module according to the second aspect of this application, and the battery pack according to the third aspect of this application.

According to the present invention, the positive electrode contains a relatively high content of manganese, and in addition, the electrolyte also contains a proper amount of a composition capable of inhibiting leaching of manganese without affecting other performance of the positive and negative electrodes, thereby obtaining a secondary battery with improved cycle life and safety performance as well as a battery module, battery pack and electric apparatus using such secondary battery.

## BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application shown in FIG. 4.
FIG. 6 is a schematic diagram of an electric apparatus according to an embodiment of this application.

Description of reference signs:

1. battery pack; 2. upper box body; 3. lower box body; 4. battery module; 5. secondary battery; 51. housing; 52. electrode assembly; and 53. top cover assembly.

## DESCRIPTION OF EMBODIMENTS

The following specifically discloses embodiments of the secondary battery, battery module, battery pack, and electric apparatus of this application with appropriate reference to detailed descriptions of the accompanying drawings. However, there may be cases in which unnecessary detailed descriptions are omitted. For example, detailed description of a well-known matter or repeated description of an actual identical structure has been omitted. This is to avoid unnecessarily prolonging the following description, for ease of understanding by persons skilled in the art. In addition, the accompanying drawings and the following descriptions are provided for those skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combinations may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are a real number. For example, a value range of "0-5" means that all real numbers in the range of "0-5" are listed herein, and "0-5" is just a short representation of a combination of these values. In addition, a parameter

expressed as an integer greater than or equal to 2 is equivalent to disclosure that the parameter is, for example, an integer 2, 3, 4, 5, 6, 7, 8, 9, 10, 11, 12, or the like.

Unless otherwise specified, all the embodiments and optional embodiments of this application can be combined with each other to form new technical solutions.

Unless otherwise specified, all the technical features and optional technical features of this application can be combined with each other to form new technical solutions

Unless otherwise specified, all the steps in this application can be performed sequentially or randomly, and preferably, are performed sequentially. For example, the method including steps (a) and (b) indicates that the method may include steps (a) and (b) performed sequentially, or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

During the research of the effect of positive electrode materials for secondary batteries on the improvement of battery performance, the inventors of this application have found that when a positive electrode active material containing a high content of Mn is used and the electrolyte is also added with a proper composition capable of inhibiting leaching of Mn without affecting other performance of the positive and negative electrodes, it is possible to take the structural stability of the positive electrode active material, the cell service life and the safety performance into consideration.

Secondary battery

In an embodiment of this application, this application provides a secondary battery. The secondary battery includes a positive electrode plate, a negative electrode plate, an electrolyte, and a separator, where the positive electrode plate includes a positive electrode material and a positive electrode current collector. The positive electrode material includes a positive electrode active material, the positive electrode active material contains a transition metal element, and a molar ratio of Mn in the transition metal element, r(Mn), satisfies $0.3 \leq r(Mn) \leq 1$. The electrolyte contains at least one selected from lithium bisoxalate borate serving as a compound (A), a compound (B) represented by the following formula (1), and a compound (C) represented by the following formula (2), and a lithium salt. A total mass percentage of the compound (A), compound (B), and compound (C) in the electrolyte is W1%, where W1% is 0.1% to 5%. The lithium salt includes a compound (D) represented by the following formula (3); and a molar ratio C1 (mol/L) of the compound (D) in the electrolyte satisfies $0.2 \leq C1 \leq 1.5$. In addition, the molar ratio of Mn in the transition metal element, r(Mn), of the positive electrode active material, the molar ratio C1 of the compound (D) in the electrolyte, and the total mass percentage W1% of the compound (A), compound (B), and compound (C) in the electrolyte satisfy the following relation: $13 \leq (100 \times W1\% + 12C1)/r(Mn) \leq 20$. As a result, a secondary battery with improved cell cycle life and safety performance can be obtained.

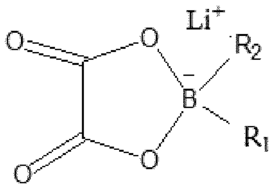

(1)

In formula (1), $R_1$ and $R_2$ each are independently a fluorine atom or fluorine-containing alkyl with 1-3 carbon atoms.

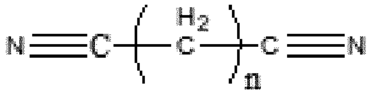

(2)

In formula (2), $2 \leq n \leq 4$.

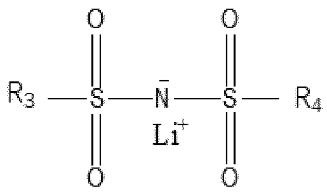

(3)

In formula (3), $R_3$ and $R_4$ each independently represent alkyl with 1-3 carbon atoms that is substitutable by a fluorine atom, a hydrogen atom, a fluorine atom, or a chlorine atom.

Although the mechanism is not clear, the applicant has the following speculation. Firstly, in a secondary battery using a positive electrode active material containing Mn, the element Mn keeps unchanged in valence state during charge and discharge. This helps to stabilize the structure of the positive electrode material. Secondly, generally the lithium salt $LiPF_6$ in the electrolyte reacts with water that is inevitable present in the battery to produce HF, and HF corrodes a cathode interface, leading to leaching of Mn. The leaching of Mn leads to collapse of the positive electrode structure. In addition, Mn deposits on a negative electrode interface to have a reduction reaction, leading to damage to a SEI film of the negative electrode, and exposing a fresh negative electrode active material to the electrolyte; the electrolyte is reduced on the negative electrode interface to form a new SEI film, which consumes active lithium, resulting in a shorter cycle life of the cell; and in addition, heat is generated in the reduction reaction, which triggers thermal runaway of the battery and causes the cell to reach a thermal runaway temperature earlier, thus affecting the safety performance of the battery. In the technical solutions of this application, the electrolyte contains at least one of the compounds (A), (B), and (C), all of which can play a role of complexing Mn ions, thereby inhibiting leaching of the Mn ions. Further, the electrolyte contains the compound (D) as the lithium salt, and the compound (D) can significantly increase a thermal decomposition temperature of the electrolyte and unlike $LiPF_6$, does not react with water to produce HF at high temperature, so that corrosion of the manganese-containing positive electrode interface by HF is mitigated, thereby further alleviating leaching of Mn. Besides, with the effect of the compounds (A), (B), and (C) in complexing Mn ions in combination with the effect of the compound (D) in reducing HF, under a condition that $13 \leq (100 \times W1\% + 12C1)/r(Mn) \leq 20$ is satisfied, the cycle life and safety performance of the secondary battery can be optimally taken into consideration. Under a condition that $(100 \times W1\% + 12C1)/r(Mn)$ is less than 13, the leaching of the Mn ions is inhibited insufficiently, so that the structural stability of the positive electrode material cannot be effectively maintained, and the cycling stability of the secondary battery is significantly reduced. Under a condition that $(100 \times W1\% + 12C1)/r(Mn)$ is greater than 20, the influence of side effects caused by the compounds (A), (B), (C). and (D) outweighs the effect of inhibition on the Mn ions. Therefore, due to excessive additives in the electrolyte, excessive active lithium is consumed in reduction and decomposition or the positive electrode current collector is corroded, resulting in shorter cycle life and lower safety performance of the battery.

In some embodiments, $1 \leq 100 \times W1\%/r(Mn) \leq 2$. When $100 \times W1\%/r(Mn)$ is within this range, the compounds (A), (B), and (C) have a more sufficient complexation effect on Mn ions, and the compounds (A), (B), and (C) are less likely to cause side effects, so that leaching of the Mn ions is inhibited better, thus further improving the safety performance of the secondary battery. When $100 \times W1\%/r(Mn)$ is below the foregoing range, the compounds (A), (B), and (C) are insufficient to effectively complex Mn ions, while when $100 \times W1\%/r(Mn)$ is above the foregoing range, the redundant compounds (A), (B), and (C) are reduced and decomposed on the surface of the negative electrode, thus not only shortening the service life of the battery but also leading to deterioration of the high-temperature safety performance of the cell of the secondary battery.

In some embodiments, $1 \leq C1/r(Mn) \leq 1.5$. When $C1/r(Mn)$ is within this range, the compound (D) can effectively exert the effect of inhibiting leaching of Mn ions by inhibiting production of HF in the electrolyte, so that it is less likely to cause a problem of corrosion of the positive electrode current collector by excessive compound (D), thus further improving the safety performance of the secondary battery.

[Positive electrode plate]

In some embodiments, the positive electrode plate includes a positive electrode current collector and a positive electrode material provided on at least one surface of the positive electrode current collector, where the positive electrode material includes a positive electrode active material.

In an example, the positive electrode current collector includes two opposite surfaces in its thickness direction, and the positive electrode material is provided on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In the secondary battery of this application, the positive electrode material includes a positive electrode active material, the positive electrode active material contains a transition metal element, and a molar ratio of Mn in the transition metal element, r(Mn), satisfies $0.3 \le r(Mn) \le 1$. During charge and discharge, the valence state of Mn in the positive electrode active material containing Mn may be kept unchanged, thus stabilizing the crystal structure of the positive electrode material. Therefore, a relatively high content of element Mn in the positive electrode active material helps to stabilize the positive electrode material during cyclic charge and discharge of a battery, thereby helping to prolong the service life of secondary batteries.

In some embodiments, the positive electrode active material may be a positive electrode active material well known in the art and used for secondary batteries, preferably including at least one selected from $LiNi_xCo_yMn_zM1_{1-x-y-z}O_2$ (M1 is selected from any one of Al, Co, Ni, Mg, Cu, Zn, Sn, B, Ga, Cr, Sr, V, and Ti, $0 \le x <1$, $0 \le y \le 1$, $0 \le z \le 1$, and $x + y + z \le 1$), $LiMn_2O_4$, and $Li_2MnO_3(1-a)LiM2O_2$ (M2 is Ni, Co, or Mn, and $0 < a < 1$). With these positive electrode active materials, a positive electrode active substance with both a relatively high content of Mn and a relatively high charge and discharge capacity can be obtained, so that the charge and discharge capacity and the cycle life of the secondary battery can be taken into consideration.

In some embodiments, from a perspective of obtaining high structural stability, high charge and discharge capacity, and long cell service life of the secondary battery, a molar ratio of the transition metal element in the positive electrode active material is 0.15 to 0.4, optionally 0.25 to 0.34. The transition metal element in the positive electrode material can maintain electric neutrality of the positive electrode material through a valence change of the transition metal element during charge and discharge, thereby not only allowing the positive electrode to have a relatively high capacity but also stabilizing the positive electrode structure. If the content of the transition metal element is excessively low and the transition metal has no valence change, the capacity of the positive electrode fails to function, and the positive electrode structure cannot be stabilized. However, if the content of the transition metal element is excessively high, the content of lithium ions in the material is reduced, resulting in an insufficient capacity. The transition metal element is preferably Mn and any one selected from Co, Ni, Cu, Zn, Cr, V, and Ti. Further, from the perspective of taking the structural stability, the charge and discharge capacity and the cell service life of the secondary battery into consideration, the transition metal element is preferably Mn, Co, or Ni.

In addition, the positive electrode active material may alternatively include other conventional materials that can be used as positive electrode active materials for batteries. One of these positive electrode active materials may be used alone, or two or more of them may be used in combination. The positive electrode active material may include but is not limited to at least one of lithium iron phosphate (for example, $LiFePO_4$ (or LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon, an olivine-structured lithium-containing phosphate, and a modified compound thereof.

In some embodiments, a mass proportion w of water in the positive electrode material may satisfy 100 ppm $\le$ w $\le$ 400 ppm, optionally 300 ppm $\le$ w $\le$ 400 ppm from the perspective of reducing the costs of the secondary battery. In the secondary battery of this application, due to the presence of the compound (D) as a lithium salt in the electrolyte, the sensitivity of the electrolyte to water is reduced. Therefore, the requirement on water content can be appropriately relaxed without compromising the performance of the secondary battery, thereby reducing the manufacturing costs of the secondary battery.

In some embodiments, the positive electrode material may further optionally include a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode material may further optionally include a conductive agent. In an example, the conductive agent may include at least one of superconducting carbon, acetylene black, carbon black, Ketjen black, carbon dot, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the prelithiation agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

[Negative electrode plate]

The negative electrode plate includes a negative electrode current collector and a negative electrode material provided on at least one surface of the negative electrode current collector, where the negative electrode material includes a negative electrode active material.

In an example, the negative electrode current collector includes two opposite surfaces in its thickness direction, and the negative electrode material is provided on either or both of the two opposite surfaces of the negative electrode current collector.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material well known in the art and used for batteries. In an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and may also use other conventional materials that can be used as the negative electrode active material for batteries. One type of these negative electrode active materials may be used alone, or two or more types may be used in combination.

In some embodiments, the negative electrode material may further optionally include a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode material may further optionally include a conductive agent. The conductive agent may be selected from at least one of superconducting carbon, acetylene black, carbon black, Ketjen black, carbon dot, carbon nanotubes, graphene, and carbon nanofiber.

In some embodiments, the negative electrode material further optionally includes other additives, such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; the negative electrode slurry is applied onto the negative electrode current collector, and processes such as drying and cold pressing are performed to obtain the negative electrode plate.

[Electrolyte]

The electrolyte conducts ions between the positive electrode plate and the negative electrode plate. The electrolyte includes an electrolytic salt and a solvent.

In the secondary battery of this application, from the perspective of taking ionic conductivity of the electrolyte, reduction of an HF acid produced in the electrolyte, reduction of corrosion to the positive and negative electrode current collectors, and the like into consideration, in the compound (D) represented by the foregoing formula (3) in the electrolytic salt, $R_3$ and $R_4$ each independently represent alkyl with 1-3 carbon atoms that is substitutable by a fluorine atom, a hydrogen atom, a fluorine atom, or a chlorine atom, and preferably $R_3$ and $R_4$ each independently represent alkyl with 1-3 carbon atoms that is substitutable by a fluorine atom, a hydrogen atom, or a fluorine atom. Further, preferably the compound (D) is lithium difluorosulfonimide, lithium bis(trifluoromethyl) sulfonimide, lithium (fluorosulfonyl)(trifluoromethyl) sulfonimide, lithium (fluorosulfonyl)(perfluoroethyl) sulfonimide, or lithium bis(perfluoroethyl) sulfonimide. Still further, preferably the compound (D) is lithium difluorosulfonimide or lithium bis(perfluoroethyl) sulfonimide.

A molar ratio C1 (mol/L) of the compound (D) in the electrolyte satisfies $0.2 \leq C1 \leq 1.5$, preferably $0.3 \leq C1 \leq 1.3$. With C1 controlled within this range, the compound (D) can effectively inhibit production of HF in the electrolyte without corroding the positive electrode plate due to excess of HF.

In some embodiments, the electrolytic salt further includes lithium hexafluorophosphate ($LiPF_6$), where a molar ratio C2 (mol/L) of $LiPF_6$ in the electrolyte satisfies $0.6 \leq C2 \leq 1$, preferably $0.6 \leq C2 \leq 0.9$. With lithium hexafluorophosphate within such a ratio range, lithium hexafluorophosphate is preferably decomposed into lithium fluoride that deposits on the surface of the positive electrode current collector, thereby alleviating corrosion of the positive electrode current

collector by the compound (D) and improving the high-temperature cycling performance and safety performance of the secondary battery.

In some embodiments, a total ratio C1 + C2 of the compound (D) in the electrolyte and $LiPF_6$ in the electrolyte is within a range of 0.8 mol/L to 2 mol/L. This can guarantee a relatively high room-temperature conductivity of the electrolyte.

In some embodiments, the electrolyte may further include a proper amount of any lithium salt selected from lithium tetrafluoroborate, lithium perchlorate, lithium hexafluoroarsenate, lithium trifluoromethanesulfonate, lithium difluorophosphate, and lithium tetrafluorooxalate phosphate as additives, and the percentage of these additives is less than 3%.

In some embodiments, the solvent may be selected from at least two of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetrahydrofuran, sulfolane, methyl sulfonyl methane, ethyl methyl sulfone, and diethyl sulfone.

In the secondary battery of this application, in terms of additives, the electrolyte includes the compounds (A), (B), and (C), and all of these compounds can be complexed with Mn ions in the positive electrode active material, thereby inhibiting the leaching of the Mn ions in the positive electrode active material. A mass percentage W1% of a total mass of the compounds (A), (B), and (C) in the electrolyte is 0.1% to 5%, preferably 0.5% to 3%. Under a condition that the percentage of the compounds (A), (B), and (C) is excessively low, it is difficult to effectively complex the metal manganese ions. However, under a condition that the percentage of the compounds (A), (B), and (C) is excessively high, these compounds are reduced and decomposed on the surface of the negative electrode, consuming more active lithium, which may shorten the high-temperature storage life of the cell.

In some embodiments, the electrolyte further optionally includes other additives, for example, a negative electrode film-forming additive or a positive electrode film-forming additive, or may include an additive capable of improving some performance of the secondary battery, for example, an additive for improving overcharge performance of the battery, or an additive for improving high-temperature or low-temperature performance of the battery.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. The soft pack may be made of plastic. Polypropylene, polybutylene terephthalate, polybutylene succinate, and the like may be listed as the plastic.

The secondary battery is not limited to any specific shape in this application, and the secondary battery may be cylindrical, rectangular, or of any other shape. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected onto the base plate, where the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art based on use and capacity of the battery module.

FIG. 3 shows a battery module 4 as an example. With reference to FIG. 3, in the battery module 4, a plurality of secondary batteries 5 may be sequentially arranged along a length direction of the battery module 4. Certainly, the batteries may alternatively be arranged in any other manner. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery modules may be further assembled into a battery pack, and the battery pack may include one or more battery modules. The specific quantity may be chosen by persons skilled in the art based on use and capacity of the battery pack.

FIG. 4 and FIG. 5 show a battery pack 1 as an example. Referring to FIG. 4 and FIG. 5, the battery pack 1 may

include a battery box and a plurality of battery modules 4 arranged in the battery box. The battery box includes an upper box body 2 and a lower box body 3. The upper box body 2 can be engaged with the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus is usually required to be light and thin, and may use a secondary battery as a power source.

## Examples

The following describes examples of this application. The examples described below are illustrative and merely used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

Examples 1 to 13 and comparative examples 1 to 4

(1) Preparation of electrolyte

In a glove box full of argon (water content < 10 ppm, and oxygen content < 1 ppm), the compound (A), compound (B), and/or compound (C) of which the percentages and types are shown in Table 1 were taken and together added into a nonaqueous organic solvent (an organic solvent mixture in which a ratio (W%/W%) of EC:EMC based on mass percentage is 3:7); 2wt% vinylene carbonate (VC) with respect to the electrolyte was added into the resulting mixture and mixed to uniformity; after that, the compound (D) of which the percentage and type are shown in Table 1 was slowly added into the organic solvent mixture, and $LiPF_6$ was added in a manner that a sum of a lithium content in $LiPF_6$ and a lithium content in the compound D is 1.5 mol/L; and after the lithium salt was completely dissolved, a target electrolyte was obtained.

(2) Preparation of positive electrode plate

The positive electrode active material, the conductive agent Super P, and the binder polyvinylidene fluoride (PVDF) shown in the following Table 1 were mixed at a mass ratio of positive electrode active material: Super P:PDVF = 8:1:1, and then N-methylpyrrolidone (NMP) was used as a solvent for preparing a positive electrode slurry. The positive electrode slurry has a solid content of 50wt%. The positive electrode slurry obtained was applied on double surfaces of a current collector aluminum foil, with a coating weight of 0.360 $mg/mm^2$, and then the aluminum foil was dried at 85°C and cold-pressed, followed by trimming, cutting, slitting, and drying under a vacuum condition at 85°C for 4 h, to prepare a positive electrode plate.

(3) Preparation of negative electrode plate

The negative electrode active material graphite, the conductive agent Super P, the thickener CMC, and the binder styrene-butadiene rubber (SBR) at a mass ratio of graphite: Super P:CMC:SBR = 80:15:3:2 were mixed to uniformity in deionized water to prepare a negative electrode slurry. The negative electrode slurry has a solid content of 30wt%. The negative electrode slurry was applied on double surfaces of a current collector copper foil, with a coating weight of 0.207 $mg/mm^2$, and then the copper foil was dried at 85°C, followed by cold pressing, trimming, cutting, slitting, and drying under a vacuum condition at 120°C for 12 h, to prepare a negative electrode plate.

(4) Separator

A polyethylene (PE) film with a thickness of 16 μm was used as a separator.

(5) Preparation of secondary battery

The prepared positive electrode plate, separator and negative electrode plate were stacked in order so that the separator was located between the positive electrode plate and the negative electrode plate for separation, and then winding was performed to obtain a bare cell. Tabs were welded. The bare cell was placed in an outer package. The prepared electrolyte was injected into the dried cell, followed by packaging, standing, formation, shaping, and the like to complete preparation of the secondary batteries in the examples and comparative examples (the pouch lithium-ion battery has a thickness of 4.0 mm, a width of 60 mm, and a length of 140 mm).

Comparative example 5

As a blank comparative example, the comparative example 5 used an electrolyte obtained using the same method mentioned above except that the electrolyte is not added with any one of the compounds (A), (B), (C), and (D) and that $LiPF_6$ with a lithium content of 1.5 mol/L was added as a lithium salt, and the secondary battery of the comparative example 5 was prepared using the same method mentioned above.

**Table 1**

| | Positive electrode material | | Compound (A) | | Compound (B) | | Compound (C) | | Compound (D) | |
|---|---|---|---|---|---|---|---|---|---|---|
| | Type | r(Mn) | Type | Percentage (wt%) | Type | Percentage (wt%) | Type | Percentage (wt%) | Type | Percentage (C1) (mol/L) |
| Example 1 | $Li[Ni_{0.5}Co_{0.2}Mn_{0.3}]O_2$ | 0.3 | Lithium bisoxalate borate | 0.5 | / | 0 | / | 0 | Lithium difluorosulfonimide | 0.43 |
| Example 2 | $Li[Ni_{0.5}Co_{0.2}Mn_{0.3}]O_2$ | 0.3 | Lithium bisoxalate borate | 0.3 | / | 0 | / | 0 | Lithium difluorosulfonimide | 0.30 |
| Example 3 | $Li[Ni_{0.5}Co_{0.2}Mn_{0.3}]O_2$ | 0.3 | Lithium bisoxalate borate | 0.6 | / | 0 | / | 0 | Lithium difluorosulfonimide | 0.35 |
| Example 4 | $Li[Ni_{0.5}Co_{0.2}Mn_{0.3}]O_2$ | 0.3 | / | 0 | / | 0 | Butanedinitrile | 0.5 | Lithium difluorosulfonimide | 0.40 |
| Example 5 | $Li[Ni_{0.5}Co_{0.2}Mn_{0.3}]O_2$ | 0.3 | / | 0 | Lithium borate difluoroxalate | 0.5 | / | 0 | Lithium difluorosulfonimide | 0.45 |
| Example 6 | $Li[Ni_{0.5}Co_{0.2}Mn_{0.3}]O_2$ | 0.3 | Lithium bisoxalate borate | 0.3 | / | 0 | / | 0 | Lithium bis(trifluoromethyl) sulfonimide | 0.40 |

| | Positive electrode material | | Compound (A) | | Compound (B) | | Compound (C) | | Compound (D) | |
|---|---|---|---|---|---|---|---|---|---|---|
| | Type | r(Mn) | Type | Percentage (wt%) | Type | Percentage (wt%) | Type | Percentage (wt%) | Type | Percentage (C1) (mol/L) |
| Example 7 | $Li[Ni_{0.5}Co_{0.2}Mn_{0.3}]O_2$ | 0.3 | Lithium bisoxalate borate | 0.1 | Lithium borate difluoroxalate | 0.4 | Adiponitrile | 0.1 | Lithium difluorosulfonimide | 0.45 |
| Example 8 | $Li[Ni_{0.5}Co_{0.2}Mn_{0.5}]O_2$ | 0.5 | Lithium bisoxalate borate | 0.5 | / | 0 | / | 0 | Lithium difluorosulfonimide | 0.70 |
| Example 9 | $Li[Ni_{0.2}Co_{0.1}Mn_{0.7}]O_2$ | 0.7 | Lithium bisoxalate borate | 1 | / | 0 | / | 0 | Lithium difluorosulfonimide | 0.90 |
| Example 10 | $Li[Ni_{0.05}Co_{0.05}Mn_{0.9}]O_2$ | 0.9 | Lithium bisoxalate borate | 1.3 | / | 0 | / | 0 | Lithium difluorosulfonimide | 1.20 |
| Example 11 | $LiMnO_2$ | 1 | Lithium bisoxalate borate | 1.5 | / | 0 | / | 0 | Lithium bis(trifluoromethyl) sulfonimide | 1.30 |
| Example 12 | $Li[Ni_{0.5}Co_{0.2}Mn_{0.3}]O_2$ | 0.3 | / | 0 | / | 0 | Adiponitrile | 0.2 | Lithium difluorosulfonimide | 0.40 |
| Example 13 | $Li[Ni_{0.5}Co_{0.2}Mn_{0.3}]O_2$ | 0.3 | / | 0 | Lithium borate difluoroxalate | 0.7 | / | 0 | Lithium bis(trifluoromethyl) sulfonimide | 0.40 |

| | Positive electrode material | | Compound (A) | | Compound (B) | | Compound (C) | | Compound (D) | |
|---|---|---|---|---|---|---|---|---|---|---|
| | Type | r(Mn) | Type | Percentage (wt%) | Type | Percentage (wt%) | Type | Percentage (wt%) | Type | Percentage (C1) (mol/L) |
| Example 14 | $Li[Ni_{0.5}Co_{0.2}Mn_{0.3}]O_2$ | 0.3 | Lithium bisoxalate borate | 0.6 | / | 0 | / | 0 | Lithium difluorosulfonimide | 0.28 |
| Example 15 | $Li[Ni_{0.3}Co_{0.3}Mn_{0.4}]O_2$ | 0.4 | Lithium bisoxalate borate | 0.4 | / | 0 | / | 0 | Lithium difluorosulfonimide | 0.62 |
| Comparative example 1 | $Li[Ni_{0.5}Co_{0.2}Mn_{0.3}]O_2$ | 0.3 | / | 0 | Lithium borate difluoroxalate | 0.5 | / | 0 | / | 0.00 |
| Comparative example 2 | $Li[Ni_{0.5}Co_{0.2}Mn_{0.3}]O_2$ | 0.3 | / | 0 | Lithium borate difluoroxalate | 0.2 | / | 0 | Lithium bis(trifluoromethyl) sulfonimide | 0.20 |
| Comparative example 3 | $Li[Ni_{0.5}Co_{0.2}Mn_{0.3}]O_2$ | 0.3 | / | 0 | Lithium borate difluoroxalate | 0.2 | / | 0 | Lithium difluorosulfonimide | 0.20 |
| Comparative example 4 | $Li[Ni_{0.5}Co_{0.2}Mn_{0.3}]O_2$ | 0.3 | / | 0 | Lithium borate difluoroxalate | 0.5 | / | 0 | Lithium difluorosulfonimide | 0.50 |
| Comparative example 5 | $Li[Ni_{0.5}Co_{0.2}Mn_{0.3}]O_2$ | 0.3 | / | 0 | / | 0 | / | 0 | / | 0.00 |

Test method:

(1) Cycling stability test for secondary battery

At 25°C, the secondary battery was charged to 4.2 V at a constant current of 1C, then charged to a current of 0.05C at a constant voltage of 4.2 V, and then discharged to 2.8 V at a constant current of 1C. This was one charge-discharge cycle. The first discharge capacity was taken as 100%. The capacity retention rate of the secondary battery after 500 cycles was calculated according to the following formula. Usually, a higher capacity retention rate of the secondary battery after 500 cycles indicates higher cycling stability of the secondary battery and a longer cycle life of the secondary battery.

$$\text{Capacity retention rate (\%) of lithium-ion battery after 500 cycles} = \text{(discharge capacity at the 500th cycle/first discharge capacity)} \times 100\%.$$

The capacity retention rates of the examples and comparative examples are shown in Table 2.

(2) Thermal runaway performance test for secondary battery

The ambient temperature was adjusted to 25°C; a cell was charged to 4.2 V at 1C, subsequently charged to 0.05C at a constant voltage, and then put into a heating furnace; and the furnace was heated at a speed of 10 °C/min, and kept at the temperature for 10 min until thermal runaway occurred in the cell, and then the process was ended. A temperature monitored in the furnace when thermal runaway occurred in the cell was recorded as a thermal runaway temperature of the secondary battery and shown in Table 2. Generally, a higher thermal runaway temperature for the secondary battery indicates higher safety of the secondary battery.

**Table 2**

| | r(Mn) | W1 (W1% × 100) | Percentage (C1) mol/L | (100 × W1% + 12C1)/r(Mn) | C1/r(Mn) | 100 × W1%/r(Mn) | Capacity retention rate (%) | Thermal runaway temperature °C |
|---|---|---|---|---|---|---|---|---|
| Example 1 | 0.3 | 0.5 | 0.43 | 18.9 | 1.43 | 1.67 | 96.30% | 145 |
| Example 2 | 0.3 | 0.3 | 0.30 | 13.0 | 1.00 | 1.00 | 95.50% | 136 |
| Example 3 | 0.3 | 0.6 | 0.35 | 16.0 | 1.17 | 2.00 | 95.80% | 139 |
| Example 4 | 0.3 | 0.5 | 0.40 | 17.7 | 1.33 | 1.67 | 96.20% | 142 |
| Example 5 | 0.3 | 0.5 | 0.45 | 19.7 | 1.50 | 1.67 | 96.00% | 143 |
| Example 6 | 0.3 | 0.3 | 0.40 | 17.0 | 1.33 | 1.00 | 95.70% | 146 |
| Example 7 | 0.3 | 0.6 | 0.45 | 20.0 | 1.50 | 2.00 | 94.60% | 135 |
| Example 8 | 0.5 | 0.5 | 0.70 | 17.8 | 1.40 | 1.00 | 96.50% | 146 |
| Example 9 | 0.7 | 1.0 | 0.90 | 16.9 | 1.29 | 1.43 | 97.30% | 150 |
| Example 10 | 0.9 | 1.3 | 1.20 | 17.4 | 1.33 | 1.44 | 97.20% | 148 |
| Example 11 | 1 | 1.5 | 1.30 | 17.1 | 1.30 | 1.50 | 97.00% | 147 |
| Example 12 | 0.3 | 0.2 | 0.40 | 16.7 | 1.33 | 0.67 | 92.30% | 132 |
| Example 13 | 0.3 | 0.7 | 0.40 | 18.3 | 1.33 | 2.33 | 91.20% | 135 |
| Example 14 | 0.3 | 0.6 | 0.28 | 13.0 | 0.92 | 2.00 | 93.20% | 128 |
| Example 15 | 0.4 | 0.4 | 0.62 | 19.6 | 1.55 | 1.00 | 91.50% | 130 |
| Comparative example 1 | 0.3 | 0.5 | 0.00 | 1.7 | 0.00 | 1.67 | 83.30% | 100 |
| Comparative example 2 | 0.3 | 0.2 | 0.20 | 8.7 | 0.67 | 0.67 | 85.40% | 105 |
| Comparative example 3 | 0.3 | 0.2 | 0.20 | 8.7 | 0.67 | 0.67 | 84.20% | 102 |
| Comparative example 4 | 0.3 | 0.5 | 0.50 | 21.7 | 1.67 | 1.67 | 85.70% | 108 |
| Comparative example 5 | 0.3 | 0.0 | 0.00 | 0.0 | 0.00 | 0.00 | 70.50% | 96 |

It can be learned from the result comparisons among the foregoing examples, comparative examples 1-4, and comparative example 5 that under a condition that a positive electrode active material with a relatively high content of Mn is used, the capacity retention rate and thermal runaway temperature of the secondary battery can be effectively increased by adding any of the compounds (A), (B), and (C) as well as the compound (D) into the electrolyte. It can be learned from the comparisons among examples 1-15 and comparative examples 1-4 that under a condition that $13 \leq (100 \times W1\% + 12C1)/r(Mn) \leq 20$ is satisfied, the capacity retention rate and thermal runaway temperature of the secondary battery are increased more significantly, where the capacity retention rate of the secondary battery after 500 cycles reaches 90% or higher, and the thermal runaway temperature reaches 120°C or higher.

In addition, it can be learned from the results of the comparisons among examples 1-11, examples 14 and 15, and examples 12 and 13 that under a condition that $13 \leq (100 \times W1\% + 12C1)/r(Mn) \leq 20$ is satisfied, when C1/r(Mn) is within the range of $1 \leq 100 \times W1\%/r(Mn) \leq 2$, the capacity retention rate and thermal runaway temperature of the secondary battery are increased more significantly, especially the thermal runaway temperature is increased more significantly. Moreover, it can be learned from the results of the comparisons among examples 1-11 and examples 12-15 that under a condition that $13 \leq (100 \times W1\% + 12C1)/r(Mn) \leq 20$ is satisfied, and both $1 \leq C1/r(Mn) \leq 1.5$ and $1 \leq 100 \times W1\%/r(Mn) \leq 2$ are satisfied, the capacity retention rate and thermal runaway temperature of the secondary battery are remarkably increased.

## Claims

**1.** A secondary battery, wherein

the secondary battery comprises a positive electrode plate, a negative electrode plate, an electrolyte, and a separator, wherein
the positive electrode plate comprises a positive electrode active material;
the positive electrode active material contains a transition metal element, and a molar ratio of Mn in the transition metal element, r(Mn), satisfies $0.3 \leq r(Mn) \leq 1$;
the electrolyte contains:

at least one selected from lithium bisoxalate borate serving as a compound (A), a compound (B) represented by the following formula (1), and a compound (C) represented by the following formula (2), and a lithium salt;

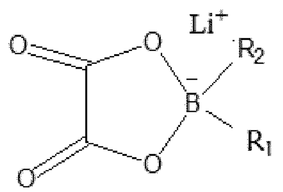

(1)

wherein in formula (1), $R_1$ and $R_2$ each are independently a fluorine atom or fluorine-containing alkyl with 1-3 carbon atoms;

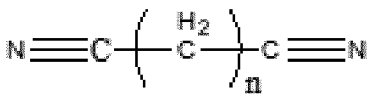

(2)

wherein in formula (2), $2 \leq n \leq 4$;
a total mass percentage of the compound (A), compound (B), and compound (C) in the electrolyte is W1%, wherein W1% is 0.1% to 5%; and
the lithium salt comprises a compound (D) represented by the following formula (3);

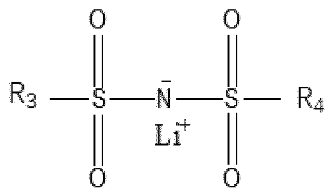

(3)

wherein in formula (3), $R_3$ and $R_4$ each independently represent alkyl with 1-3 carbon atoms that is substitutable by a fluorine atom, a hydrogen atom, a fluorine atom, or a chlorine atom;
a molar ratio C1 of the compound (D) in the electrolyte satisfies $0.2 \leq C1 \leq 1.5$, wherein C1 is in unit of mol/L; and
the molar ratio of Mn in the transition metal element, r(Mn), of the positive electrode active material, the molar ratio C1 of the compound (D) in the electrolyte, and the total mass percentage W1% of the compound (A), compound (B), and compound (C) in the electrolyte satisfy the following relation:

$$13 \leq (100 \times W1\% + 12C1)/r(Mn) \leq 20.$$

**2.** The secondary battery according to claim 1, wherein

$$1 \leq 100 \times W1\%/r(Mn) \leq 2.$$

**3.** The secondary battery according to claim 1 or 2, wherein

$$1 \leq C1/r(Mn) \leq 1.5.$$

**4.** The secondary battery according to any one of claims 1 to 3, wherein
the lithium salt further comprises $LiPF_6$, and a molar ratio C2 of $LiPF_6$ in the electrolyte satisfies $0.6 \leq C2 \leq 1$, wherein C2 is in unit of mol/L.

**5.** The secondary battery according to claim 4, wherein

$$0.8 \leq C1 + C2 \leq 2.$$

**6.** The secondary battery according to any one of claims 1 to 5, wherein
W1% is 0.5% to 3%.

**7.** The secondary battery according to any one of claims 1 to 6, wherein
the compound (B) is lithium borate difluoroxalate.

**8.** The secondary battery according to any one of claims 1 to 7, wherein
the compound (D) is at least one selected from lithium difluorosulfonimide, lithium bis(trifluoromethyl) sulfonimide, lithium (fluorosulfonyl)(trifluoromethyl) sulfonimide, lithium (fluorosulfonyl)(perfluoroethyl) sulfonimide, and lithium bis(perfluoroethyl) sulfonimide, optionally at least one selected from lithium difluorosulfonimide and lithium bis(perfluoroethyl) sulfonimide.

**9.** The secondary battery according to any one of claims 1 to 8, wherein

an active material contained in the positive electrode comprises at least one selected from $LiNi_xCo_yMn_zM1_{1-x-y-z}O_2$, $LiMn_2O_4$, and $Li_2MnO_3(1-a)LiM2O_2$; wherein
M1 is selected from any one of Al, Co, Ni, Mg, Cu, Zn, Sn, B, Ga, Cr, Sr, V, and Ti, $0 \leq x < 1$, $0 \leq y \leq 1$, $0 \leq z \leq 1$, and $x + y + z \leq 1$;
M2 is Ni, Co, or Mn; and
$0 < a < 1$.

10. The secondary battery according to any one of claims 1 to 9, wherein a molar ratio of the transition metal element in the positive electrode active material is 0.15 to 0.4, optionally 0.25 to 0.34.

11. The secondary battery according to any one of claims 1 to 10, wherein the positive electrode plate comprises a positive electrode material and a positive electrode current collector, wherein a mass proportion w of water in the positive electrode material satisfies 100 ppm $\leq$ w $\leq$ 400 ppm.

12. A battery module, **characterized by** comprising the secondary battery according to any one of claims 1 to 11.

13. A battery pack, **characterized by** comprising the battery module according to claim 12.

14. An electric apparatus, **characterized by** comprising at least one of the secondary battery according to any one of claims 1 to 11, the battery module according to claim 12, or the battery pack according to claim 13.

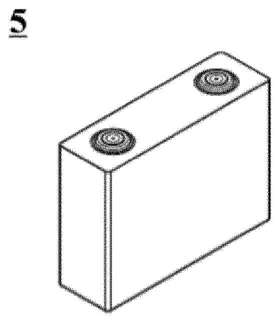


FIG. 1

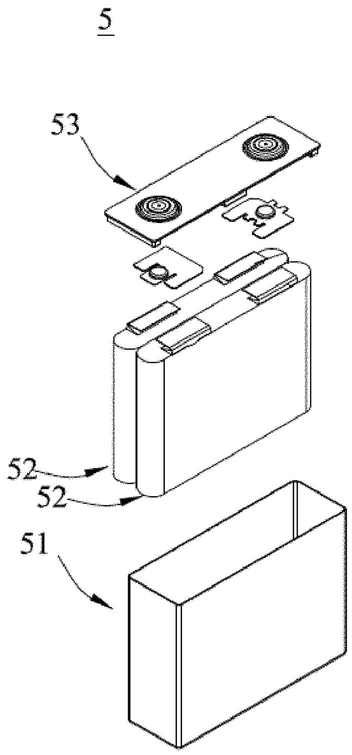


FIG. 2

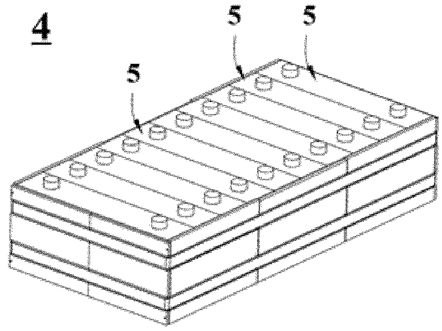


FIG. 3

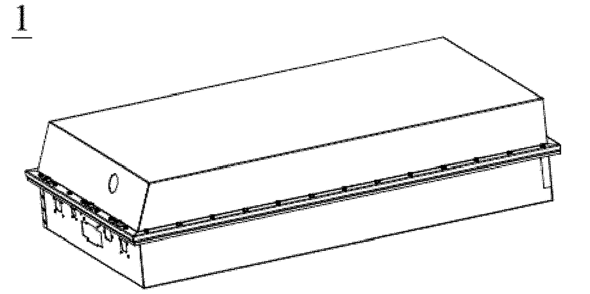


FIG. 4

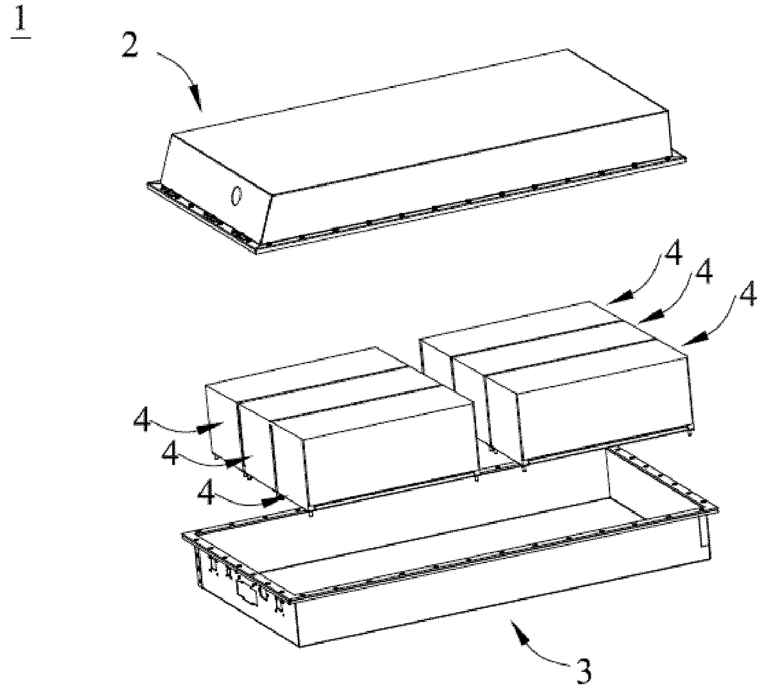


FIG. 5

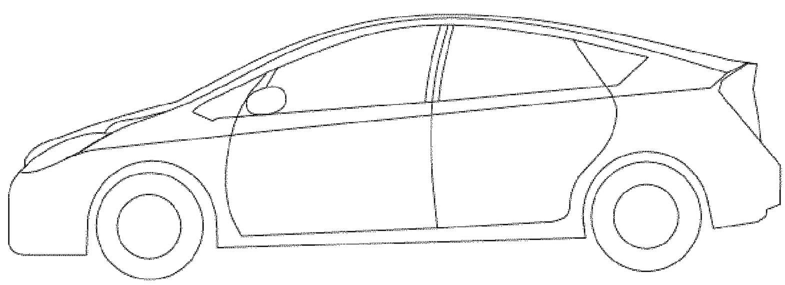

FIG. 6

## INTERNATIONAL SEARCH REPORT

International application No.
**PCT/CN2022/094455**

**A. CLASSIFICATION OF SUBJECT MATTER**

H01M 10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 正极, 阴极, 电解液, 草酸, 乙二酸, 硼酸锂, 二腈, LiBOB, LiFOB, LiDFOB, LiODFB, 磺酰, 亚胺锂, LiFSI, batter+, cell?, cathode, positive, electrod?, electrolyte?, lithium, oxalate, borate, difluoro, bisfluoro, sulfonimide

**C. DOCUMENTS CONSIDERED TO BE RELEVANT**

| Category* | Citation of document, with indication, where appropriate, of the relevant passages | Relevant to claim No. |
|---|---|---|
| X | CN 111640984 A (ZHUHAI COSMX BATTERY CO., LTD.) 08 September 2020 (2020-09-08)<br>description, paragraphs 31-129 | 1, 3-14 |
| Y | CN 111640984 A (ZHUHAI COSMX BATTERY CO., LTD.) 08 September 2020 (2020-09-08)<br>description, paragraphs 31-129 | 1, 3-14 |
| Y | CN 111490294 A (DONGGUAN DONGYANG GUANGKE RESEARCH & DEVELOPMENT CO., LTD.) 04 August 2020 (2020-08-04)<br>description, paragraphs 6-31 | 1, 3-14 |
| Y | CN 105742703 A (SOUTH CHINA NORMAL UNIVERSITY) 06 July 2016 (2016-07-06)<br>description, paragraph 5 | 1, 3-14 |
| A | CN 109802181 A (QINGDAO INSTITUTE OF BIOENERGY AND BIOPROCESS TECHNOLOGY, CHINESE ACADEMY OF SCIENCES) 24 May 2019 (2019-05-24)<br>entire document | 1-14 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 December 2022** | **20 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/094455**

**C. DOCUMENTS CONSIDERED TO BE RELEVANT**

| Category* | Citation of document, with indication, where appropriate, of the relevant passages | Relevant to claim No. |
|---|---|---|
| A | CN 109713298 A (SVOLT ENERGY TECHNOLOGY CO., LTD.) 03 May 2019 (2019-05-03) entire document | 1-14 |
| A | JP 2007172990 A (SONY CORP.) 05 July 2007 (2007-07-05) entire document | 1-14 |

Form PCT/ISA/210 (second sheet) (January 2015)

**INTERNATIONAL SEARCH REPORT**
**Information on patent family members**

International application No.
**PCT/CN2022/094455**

| Patent document cited in search report | | | Publication date (day/month/year) | Patent family member(s) | Publication date (day/month/year) |
|---|---|---|---|---|---|
| CN | 111640984 | A | 08 September 2020 | None | |
| CN | 111490294 | A | 04 August 2020 | None | |
| CN | 105742703 | A | 06 July 2016 | None | |
| CN | 109802181 | A | 24 May 2019 | None | |
| CN | 109713298 | A | 03 May 2019 | None | |
| JP | 2007172990 | A | 05 July 2007 | None | |

Form PCT/ISA/210 (patent family annex) (January 2015)